# EUROPEAN PATENT SPECIFICATION

(11) **EP 2 146 064 B1**
(45) Date of publication and mention of the grant of the patent: **17.10.2012**
(21) Application number: 08740143.6
(22) Date of filing: 03.04.2008
(51) Int. Cl.: F01N 3/08, B01D 53/94, F01N 3/20, F01N 3/28

(54) **EXHAUST GAS PURIFICATION APPARATUS FOR INTERNAL COMBUSTION ENGINE**
ABGASREINIGUNGSVORRICHTUNG FÜR VERBRENNUNGSMOTOR
APPAREIL DE PURIFICATION DES GAZ D'ÉCHAPPEMENT D'UN MOTEUR À COMBUSTION INTERNE

(30) Priority: 06.04.2007 JP 2007100649
(43) Date of publication of application: 20.01.2010
(73) Proprietor: Toyota Jidosha Kabushiki Kaisha, Toyota-shi Aichi 471-8571 (JP)
(72) Inventor: TOSHIOKA, Shunsuke, Toyota-shi Aichi 471-8571 (JP); ODA, Tomihisa, Toyota-shi Aichi 471-8571 (JP); ITOH, Kazuhiro, Toyota-shi Aichi 471-8571 (JP)
(74) Representative: Kopp, Stephan
(86) International application number: PCT/JP2008/057040
(87) International publication number: WO 2008/126876

(56) References cited:
- JP-A- 2003 286 828
- JP-A- 2003 293 735
- JP-A- 2005 240 811
- US-A1- 2005 204 729

## Description

### TECHNICAL FIELD

The present invention relates to an exhaust gas purification system of an internal combustion engine.

### BACKGROUND ART

Known in the art is an internal combustion engine arranging a catalyst suitable for reducing NOx in exhaust gas by ammonia in the presence of excess oxygen in an engine exhaust passage, feeding an aqueous urea solution to this catalyst, storing part of the urea fed to the catalyst in the catalyst, and using the ammonia generated from the urea stored in the catalyst to reduce the NOx in the exhaust gas (see U.S. Patent No. 5,628,186 and WO 99/67511).

In this internal combustion engine, part of the urea fed to the catalyst is stored once in the catalyst. From this stored urea, the urea-derived substance such as ammonia is produced. Part of the urea-derived substances is used for reducing the NOx, while the remainder is discharged from the catalyst without being used for reducing the NOx. In this case, the amount of the urea-derived substances released from the catalyst becomes greater the greater the amount of urea stored in the catalyst. Therefore, when the catalyst stores a large amount of urea, a large amount of urea-derived substances is liable to be undesirably discharged from the catalyst.

In this regard, it may be considered that, if feeding an aqueous urea solution to the catalyst in an amount commensurate with the amount of NOx discharged from the engine, it is possible to block the catalyst from storing a large amount of urea, therefore it is possible to block a large amount of urea-derived substances from being discharged from the catalyst. However, it is difficult to accurately find the amount of NOx discharged from the engine or the amount of urea commensurate with this. Alternatively, it may be considered that, if finding the amount of urea stored in the catalyst and controlling the amount of aqueous urea solution fed to the catalyst so that this stored amount of urea does not exceed an allowable upper limit, it is possible to block the catalyst from storing a large amount of urea. However, accurately finding the amount of urea stored in the catalyst is difficult. Whatever the case, there is the problem that it is not possible to reliably block the discharge of a large amount of urea-derived substances from the catalyst. If reducing the amount of aqueous urea solution fed to the catalyst, it is possible to block the catalyst from storing a large amount of urea, but in this case it is no longer possible to reduce the NOx well.

US 2005/204729 A1 discloses a catalyst suitable for reduction of the NOx in an exhaust gas by ammonia in the presence of excess oxygen is arranged in the exhaust passage of an internal combustion engine. An aqueous urea solution is fed through a flow control valve to the inside of the exhaust passage upstream of the catalyst. When the temperature of the catalyst is low, a large amount of the aqueous urea solution is fed to make the urea contained in the aqueous urea solution be stored in the catalyst. When the engine is accelerated and the temperature of the catalyst rises, ammonia is released at a little at a time from the inside of the catalyst and the NOx in the exhaust gas is reduced by the released ammonia.

### DISCLOSURE OF THE INVENTION

Therefore, an object of the present invention is to provide an exhaust purification system of an internal combustion engine able to block a large amount of ammonia generating compound from being discharged from a catalyst.

According to the present invention, there is provided an exhaust purification system of an internal combustion engine arranging a catalyst suitable for reducing NOx in the exhaust gas by ammonia under an excess of oxygen in an engine exhaust passage, the system comprising: a feeding means for feeding an ammonia generating compound to the catalyst; and a feed controlling means for controlling the amount of feed of the ammonia generating compound, the catalyst having a function of storing at least part of the ammonia generating compound fed to the catalyst in the catalyst and generating ammonia from the ammonia generating compound stored in the catalyst and using the generated ammonia to reduce the NOx in the exhaust gas, the system further comprising a judging means for judging if a storage capacity of the catalyst is larger than a preset allowable upper limit capacity, wherein the feed controlling means prohibits the feed of the ammonia generating compound when the storage capacity of the catalyst is larger than the allowable upper limit capacity.

### BRIEF DESCRIPTION OF THE DRAWINGS

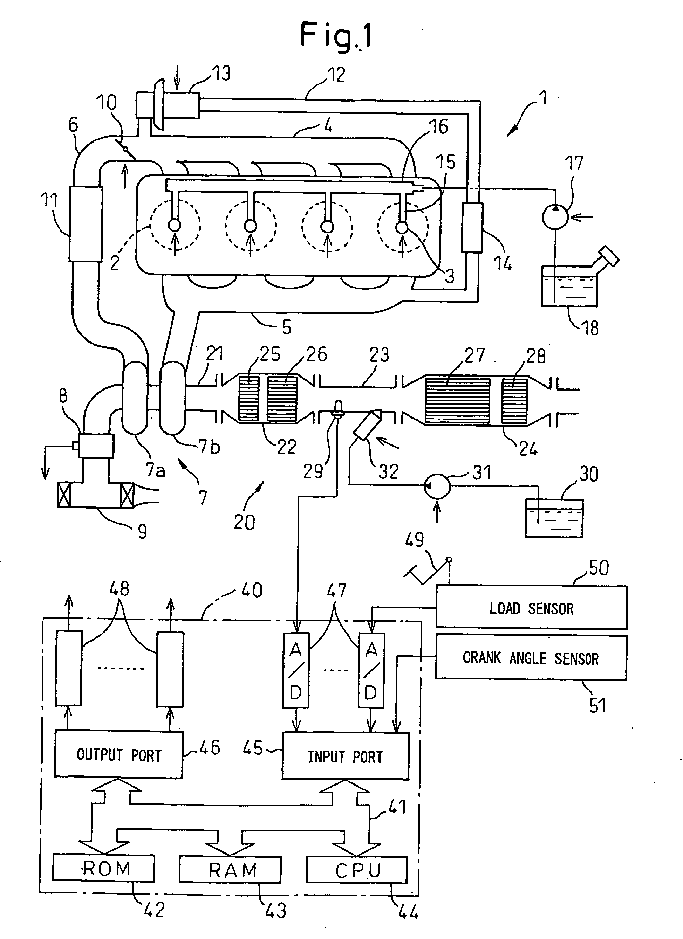

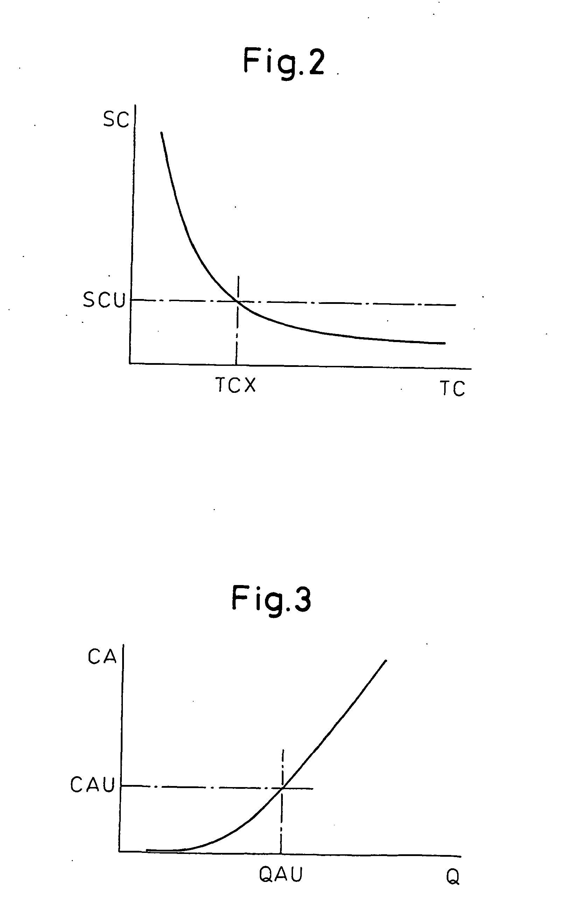

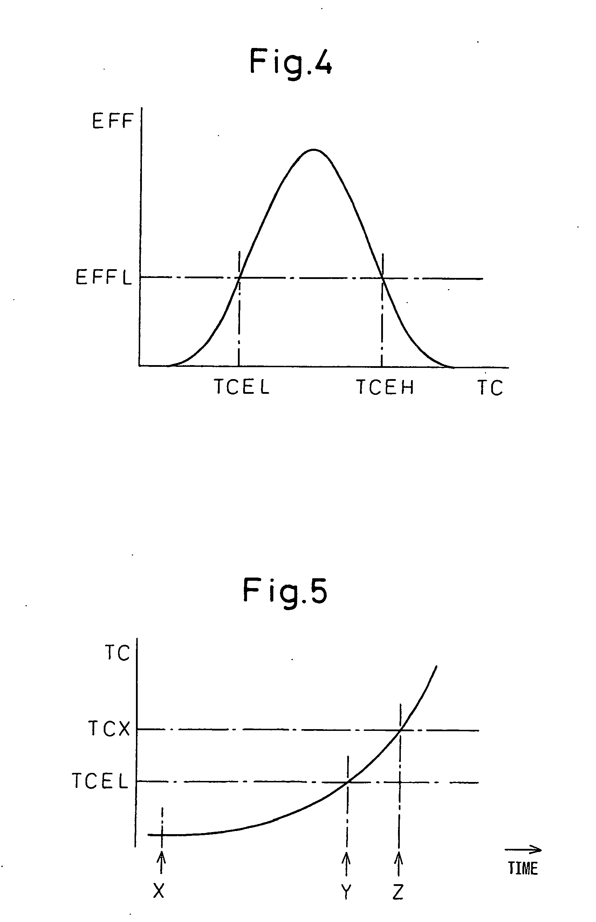

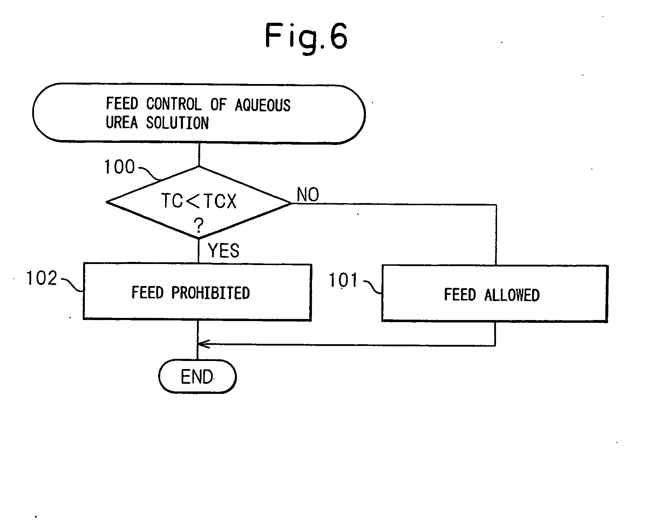

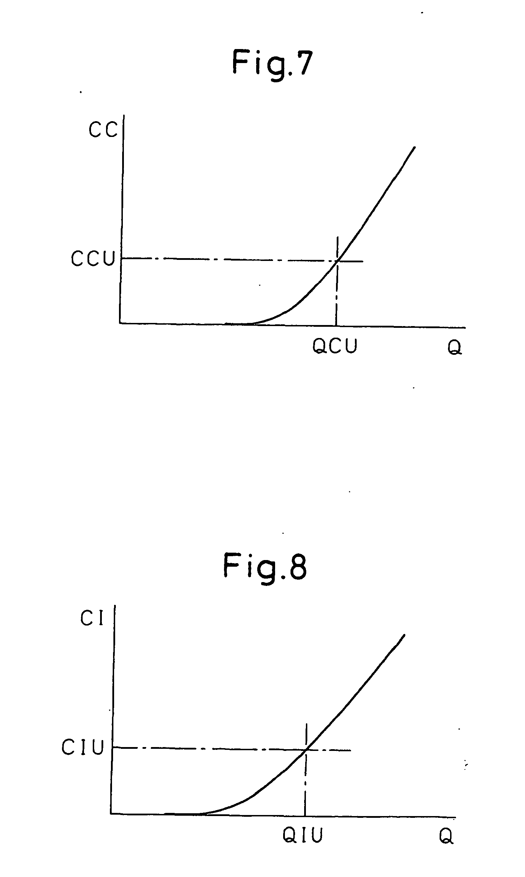

FIG. 1 is an overview of an internal combustion engine, FIG. 2 is a graph showing a storage capacity of a catalyst, FIG. 3 is a graph showing an example of the relationship between an amount of urea stored in the catalyst and a concentration of ammonia later discharged from the catalyst, FIG. 4 is a graph showing an NOx purification rate, FIG. 5 is a time chart for explaining an embodiment according to the present invention, FIG. 6 is a flowchart showing a control routine for feed of an aqueous urea solution, FIG. 7 is a graph showing an example of a relationship of an amount of urea stored in the catalyst and a concentration of hydrogen cyanide later discharged from the catalyst, and FIG. 8 is a graph showing a relationship between an amount of urea stored in a catalyst and a concentration of isocyanic acid later discharged from the catalyst.

### BEST MODE FOR CARRYING OUT THE INVENTION

FIG. 1 shows the case of application of the present invention to a compression ignition type internal combustion engine. Note that the present invention can also be applied to a gasoline engine.

Referring to FIG. 1, 1 is an engine body, 2 is a combustion chamber of each cylinder, 3 is an electronic control type fuel injector for injecting fuel into each combustion chamber 2, 4 is an intake manifold, and 5 is an exhaust manifold. The intake manifold 4 is connected through an intake duct 6 to an outlet of a compressor 7a of an exhaust turbocharger 7. An inlet of the compressor 7a is connected through an air flow meter 8 to an air cleaner 9. Inside the intake duct 6, an electrical control type throttle valve 10 is arranged. Further, around the intake duct 6, a cooling device 11 is arranged to cool the intake air flowing inside the intake duct 6. In the embodiment shown in FIG. 1, the engine cooling water is guided into the cooling device 11 where the engine cooling water is used to cool the intake air. On the other hand, the exhaust manifold 5 is connected to an inlet of an exhaust turbine 7b of the exhaust turbocharger 7. The outlet of the exhaust turbine 7b is connected to an exhaust post-treatment device 20.

The exhaust manifold 5 and the intake manifold 4 are connected with each other through an exhaust gas recirculation (hereinafter referred to as an "EGR") passage 12. Inside the EGR passage 12, an electrical control type EGR control valve 13 is arranged. Further, around the EGR passage 12, a cooling device 14 is arranged for cooling the EGR gas flowing through the EGR passage. In the embodiment shown in FIG. 1, engine cooling water is guided into the cooling device 14 where the engine cooling water is used to cool the EGR gas. On the other hand, each fuel injector 3 is connected through a fuel feed tube 15 to a common rail 16. This common rail 16 is connected through an electronic control type variable discharge fuel pump 17 to a fuel tank 18. The fuel in the fuel tank 18 is fed by the fuel pump 17 inside the common rail 16. The fuel fed into the common rail 16 is fed through each fuel feed tube 15 to each fuel injector 3.

The exhaust post-treatment device 20 is provided with an upstream side catalytic converter 22 connected through an exhaust pipe 21 to an outlet of the exhaust turbine 7b and a downstream side catalytic converter 24 connected through an exhaust pipe 23 to the upstream side catalytic converter 22. Inside the upstream side catalytic converter 22, a catalyst 25 and catalyst 26 are arranged in that order from the upstream side. Inside the downstream side catalytic converter 24, a catalyst 27 and catalyst 28 are arranged in that order from the upstream side. The catalysts 25, 26, and 28 are comprised of catalysts having oxidation functions, for example, oxidation catalysts or three-way catalysts. As opposed to this, the catalyst 27 is comprised of an NOx selective reduction catalyst suitable for reducing the NOx in the exhaust gas by ammonia under an excess of oxygen. Further, the catalysts 25, 27, and 28 are carried on honeycomb carriers. The catalyst 26 is carried on a particulate filter for trapping particulate in the exhaust gas. In the exhaust pipe 23, a temperature sensor 29 for detecting the exhaust gas flowing into the downstream side catalytic converter 24 is arranged. The temperature of the exhaust gas flowing into the downstream side catalytic converter 24 expresses the temperature of the catalyst 27.

On the other hand, a liquid containing an ammonia generating compound which generates ammonia is stored in a tank 30. The liquid containing the ammonia generating compound stored in the tank 30 is fed into the exhaust pipe 23 through a feed pump 31 and an electromagnetically controlled addition control valve 32.

The electronic control unit 40 is comprised of a digital computer which is provided with components connected to each other by a bidirectional bus 41 such as a ROM (read only memory) 42, RAM (random access memory) 43, CPU (microprocessor) 44, input port 45, and output port 46. The air flow meter 8 generates an output voltage proportional to the intake air amount. This output voltage is input through a corresponding AD converter 47 to the input port 45. On the other hand, the output signal of the temperature sensor 29 is input through a corresponding AD converter 47 to the input port 45. An accelerator pedal 49 has a load sensor 50 connected to it for generating an output voltage proportional to the amount of depression of the accelerator pedal 49. The output voltage of the load sensor 50 is input through a corresponding AD converter 47 to the input port 45. Furthermore, the input port 45 has a crank angle sensor 51 connected to it for generating an output pulse each time the crankshaft rotates by for example 30°. On the other hand, the output port 46 is connected through a corresponding drive circuit 48 to the fuel injector 3, throttle valve 10 drive device, EGR control valve 13, fuel pump 17, feed pump 31, and addition control valve 32.

As explained above, the exhaust pipe 23 upstream of the catalyst 27 is fed a liquid containing an ammonia generating compound. Regarding the ammonia generating compound able to generate ammonia, there are various compounds. Therefore, various compounds can be used as the ammonia generating compound. In the embodiment according to the present invention, urea is used as the ammonia generating compound. As the liquid containing the ammonia generating compound, an aqueous urea solution is used. Therefore, below, the present invention will be explained taking as an example the case of feeding an aqueous urea solution into the exhaust pipe 23 upstream of the catalyst 27.

On the other hand, as explained above, the catalyst 27 is comprised of a NOx selective reduction catalyst. In the embodiment shown in FIG. 1, as this NOx selective reduction catalyst, a catalyst V₂O₅/TiO₂ using titania as the carrier and carrying vanadium oxide on this carrier (hereinafter referred to as a "vanadium titania catalyst") or a catalyst Cu/ZSM5 using zeolite as the carrier and carrying copper on this carrier (hereinafter referred to as a "copper zeolite catalyst") is used.

If feeding the aqueous urea solution into exhaust gas containing an excess of oxygen, the NO contained in the exhaust gas is reduced by the ammonia NH₃ generated from the urea CO(NH₂)₂ on the catalyst 27 (for example, 2NH₃+2NO+1/2O₂→2N₂+3H₂O).

Namely, the urea in the fed aqueous urea solution first deposits on the catalyst 27. At this time, if the temperature of the catalyst 27 is high, for example, substantially 350°C or more, the urea thermally decomposes all at once and generates ammonia.

On the other hand, when the temperature of the catalyst 27 is from about 132°C to about 350°C, the urea is stored once inside the catalyst 27, then ammonia is generated and released a little bit at a time from the urea stored inside the catalyst 27. The ammonia is generated in this case probably because the urea morphologically changes in the catalyst 27. Namely, the urea changes to biuret at about 132°C. The biuret changes to cyanuric acid at about 190°C. The cyanuric acid changes to cyanic acid or isocyanic acid at about 360°C. Alternatively, as the elapsed time becomes longer, the urea changes to biuret. The biuret changes to cyanuric acid, and the cyanuric acid changes to cyanic acid or isocyanic acid. It is thought that ammonia is generated a little bit at a time in the process of this kind of morphological change.

When the temperature of the catalyst 27 is equal to or lower than about 132°C which is the thermal decomposition temperature of urea, if feeding the aqueous urea solution to the catalyst 27, the urea in the aqueous urea solution will be stored in the catalyst 27. At this time, almost no ammonia is generated from the stored urea.

However, after this, for example, if the engine is operated to accelerate and the temperature of the catalyst 27 becomes high, the above-mentioned ammonia, biuret, cyanuric acid, cyanic acid, isocyanic acid, etc. are produced from the urea stored in the catalyst 27. Furthermore, sometimes these products and the hydrocarbons HC in the exhaust gas react whereby hydrogen cyanide is produced. Part of the urea-derived substances produced from the urea in this way are used for reducing the NOx in the exhaust gas, but the remainder ends up being discharged from the catalyst 27 without reducing the NOx.

The amount of the urea-derived substances discharged from the catalyst 27 becomes greater the greater the amount of urea stored in the catalyst 27. Therefore, if the catalyst 27 stores a large amount of urea, a large amount of urea-derived substances is liable to be undesirably discharged from the catalyst 27.

On the other hand, there is a limit to the amount of urea which can be stored in the catalyst 27. That is, the catalyst 27 can only store the urea up to its storage capacity. This storage capacity varies in accordance with the atmosphere of the catalyst 27, for example, the temperature of the catalyst 27, therefore when the storage capacity of the catalyst 27 is large, the catalyst 27 can store a large amount of urea, while when the storage capacity of the catalyst 27 is small, the catalyst 27 can only store a small amount of urea.

This being the case, when the storage capacity of the catalyst 27 is large, if prohibiting the feed of the aqueous urea solution to the catalyst 27, it is possible to block the catalyst 27 from storing a large amount of urea. This is the basic thinking in the present invention.

That is, in the embodiment according to the present invention, it is judged if the storage capacity of the catalyst 27 is larger than the predetermined allowable upper limit capacity. When it is judged that the storage capacity of the catalyst 27 is larger than the allowable upper limit capacity, the feed of the aqueous urea solution is prohibited. In this case, it is difficult to directly find the storage capacity of the catalyst 27. On the other hand, the storage capacity SC of the catalyst 27, as shown in FIG. 2, becomes larger when the temperature TC of the catalyst 27 is high compared to when it is low. When the temperature TC of the catalyst 27 is TCX, the storage capacity SC of the catalyst 27 becomes the upper limit amount SCU.

Therefore, in an embodiment according to the present invention, the temperature TC where the storage capacity SC of the catalyst 27 becomes the allowable upper limit capacity SCU is set as a preset temperature TCX. When the temperature TC of the catalyst 27 is lower than this preset temperature TCX, it is judged that the storage capacity SC of the catalyst 27 is greater than the allowable upper limit capacity SCU. At this time, the feed of the aqueous urea solution is prohibited. On the other hand, when the temperature of the catalyst 27 is higher than the preset temperature TCX, it is judged that the storage capacity SC of the catalyst 27 is smaller than the allowable upper limit capacity SCU. At this time, the feed of the aqueous urea solution is allowed. That is, for example, aqueous urea solution is fed to the catalyst 27 by an amount corresponding to the amount of NOx discharged from the engine. By doing this, the amount of urea stored in the catalyst 27 will never exceed the allowable upper limit capacity SCU. Therefore, even without finding the amount of urea actually stored in the catalyst 27, it is possible to block a large amount of urea from being stored in the catalyst 27.

The allowable upper limit capacity SCU may be set in any way. In the embodiment according to the present invention, the allowable upper limit capacity SCU is set as follows.

As explained above, the amount of the urea-derived substances discharged from the catalyst 27 becomes greater the greater the amount of urea stored in the catalyst 27. FIG. 3 shows an example of the relationship between the amount Q of urea stored in the catalyst 27 and the concentration CA of ammonia discharged from the catalyst 27 for example at the time of engine acceleration. As will be understood from FIG. 3, when the stored amount of urea Q is large, compared to when the stored amount of urea Q is small, a high concentration of ammonia is discharged from the catalyst 27.

Here, to prevent the ammonia discharged concentration CA from exceeding the preset allowable upper limit value CAU, as will be understood from FIG. 3, it is necessary to prevent the amount of urea Q stored in the catalyst 27 from exceeding the upper limit amount QAU.

On the other hand, as explained above, the amount of urea stored in the catalyst 27 will never exceed the allowable upper limit capacity SCU. Therefore, in the embodiment according to the present invention, the allowable upper limit capacity SCU is set to the upper limit amount QAU for ammonia. As a result, the concentration of ammonia discharged later from the catalyst 27 is blocked from exceeding the allowable upper limit value CAU.

Note that, it is also possible to set the allowable upper limit capacity SCU smaller than the upper limit amount QAU for the ammonia. However, if setting the allowable upper limit capacity SCU to this upper limit amount QAU, it becomes possible to feed a sufficient amount of urea for reduction of NOx to the catalyst 27 and reduce the amount of ammonia discharged from the catalyst 27.

In this regard, the NOx purification rate EFF of the catalyst 27, as shown in FIG. 4, becomes lower than the allowable lower limit rate EFFL if the temperature TC of the catalyst 27 is lower than the lower limit temperature TCEL or higher than the upper limit temperature TCEH, and becomes higher than the allowable lower limit rate EEFL if the temperature TC of the catalyst 27 is from the lower limit temperature TCEL to the upper limit temperature TCEH. The above-mentioned preset temperature TCX is higher than this lower limit temperature TCEL.

Here, for example consider the aqueous urea solution feed start timing after the engine has started. As shown by X in FIG. 5, when the engine is started, the temperature TC of the catalyst 27 gradually rises. At this time, the feed of the aqueous urea solution is stopped. Next, as shown by Y in FIG. 5, even if the temperature TC of the catalyst 27 reaches the lower limit temperature TCEL, the feed of the aqueous urea solution is not started. Next, as shown by Z in FIG. 5, if the temperature TC of the catalyst 27 reaches the preset temperature TCX, the feed of the aqueous urea solution is started. That is, in the embodiment according to the present invention, even if the catalyst 27 is sufficiently activated for reduction of NOx, the feed of the aqueous urea solution is not started. Only when the temperature TC of the catalyst 27 rises to the temperature able to block the discharge of a large amount of urea-derived substances is the feed of the aqueous urea solution finally started.

FIG. 6 shows the routine for controlling the feed of the aqueous urea solution in an embodiment according to the present invention. This routine is executed by interruption every fixed time interval.

Referring to FIG. 6, first, at step 100, it is judged if the temperature TC of the catalyst 27 is lower than the preset temperature TCX. When TC≥TCX, next the routine proceeds to step 101 where the feed of the aqueous urea solution is allowed. As opposed to this, when TC<TCX, next the routine proceeds to step 102 where the feed of the aqueous urea solution is prohibited.

The allowable upper limit capacity SCU can be set as follows:

FIG. 7 shows an example of the relationship between the amount of urea Q stored in the catalyst 27 and the concentration of hydrogen cyanide CC discharged from the catalyst 27 later, for example, at the time of engine acceleration, FIG. 8 shows an example of the relationship between the amount of urea Q stored in the catalyst 27 and the concentration of isocyanic acid CI discharged from the catalyst 27 later, for example, at the time of engine acceleration. As will be understood from FIGS. 7 and 8, to prevent the concentration of discharge of hydrogen cyanide CC from exceeding the preset allowable upper limit value CCU, it is sufficient to prevent the amount of urea Q stored in the catalyst 27 from exceeding the upper limit amount QCU. To prevent the concentration of discharge of isocyanic acid CI from exceeding the preset allowable upper limit value CIU, it is sufficient to prevent the amount of urea Q stored in the catalyst 27 from exceeding the upper limit amount QIU.

Therefore, it is also possible to set the allowable upper limit capacity SCU to the upper limit amount QCU for the hydrogen cyanide or set the upper limit amount QIU for the isocyanic acid.

Alternatively, it is also possible to set the allowable upper limit capacity SCU to the smallest of the upper limit amounts QAU, QCU, and QIU for the ammonia, hydrogen cyanide, and isocyanic acid. By doing this, it is possible to block the ammonia, hydrogen cyanide, and isocyanic acid from exceeding the allowable upper limit values CAU, CCU, and CIU, respectively.

### LIST OF REFERENCE NUMERALS

- 1 ...: engine body
- 5 ...: exhaust manifold
- 27 ...: catalyst
- 29 ...: temperature sensor
- 32 ...: addition control valve

## Claims

1. An exhaust purification system of an internal combustion engine (1) arranging a catalyst (27) suitable for reducing NOx in the exhaust gas by ammonia under an excess of oxygen in an engine exhaust passage, the system comprising:
a feeding means (32) for feeding an ammonia generating compound to the catalyst (27); and
a feed controlling means for controlling the amount of feed of the ammonia generating compound,
the catalyst (27) having a function of storing at least part of the ammonia generating compound fed to the catalyst (27) in the catalyst (27) and generating ammonia from the ammonia generating compound stored in the catalyst (27) and using the generated ammonia to reduce the NOx in the exhaust gas, wherein the storage capacity (SC) of the catalyst (27) becomes larger when the temperature of the catalyst (27) is low compared with when the temperature of the catalyst (27) is high,
the system further comprising a judging means for judging if a storage capacity (SC) of the catalyst (27) is larger than a preset allowable upper limit capacity (SCU), wherein the judging means judges that the storage capacity (SC) of the catalyst (27) is larger than the allowable upper limit capacity (SCU) when the temperature of the catalyst (27) is lower than a preset temperature set to a temperature where the storage capacity (SC) of the catalyst (27) becomes the allowable upper limit capacity (SCU), and
wherein the feed controlling means prohibits the feed of the ammonia generating compound when the storage capacity (SC) of the catalyst (27) is larger than the allowable upper limit capacity (SCU).

2. An exhaust purification system of an internal combustion engine (1) as set forth in claim 1, wherein the allowable upper limit capacity (SCU) is set so that the amount of a substance derived from the ammonia generating compound discharged from the catalyst (27) later does not exceed the allowable upper limit amount.

3. An exhaust purification system of an internal combustion engine (1) as set forth in claim 2, wherein the substance derived from the ammonia generating compound is at least one substance selected from ammonia, hydrogen cyanide, and isocyanic acid.

4. An exhaust purification system of an internal combustion engine (1) as set forth in claim 2, wherein the allowable upper limit capacity (SCU) is set so that the ammonia, hydrogen cyanide, and isocyanic acid discharged later from the catalyst (27) all do not exceed the respective allowable upper limit amounts (QAU, QCU, QIU).

5. An exhaust purification system of an internal combustion engine (1) as set forth in claim 1, wherein an NOx reduction rate of the catalyst (27) becomes higher when the temperature of the catalyst (27) is high compared with when the temperature of the catalyst (27) is low, and wherein the preset temperature is set higher than the temperature where the NOx purification rate of the catalyst (27) becomes a preset allowable lower limit rate.

6. An exhaust purification system of an internal combustion engine (1) as set forth in claim 1, wherein the feed controlling means allows the feed of the ammonia generating compound when the storage capacity (SC) of the catalyst (27) is smaller than the allowable upper limit capacity (SCU).

## Patentansprüche

1. Abgasreinigungssystem für einen Verbrennungsmotor (1), in dem ein Katalysator (27), der zum Reduzieren von NOx in dem Abgas durch Ammoniak bei Sauerstoffüberschuss geeignet ist, in einer Motorabgasleitung angeordnet ist, wobei das System aufweist:
eine Zuführeinrichtung (32) zum Zuführen einer Ammoniak erzeugenden Verbindung zu dem Katalysator (27); und
eine Zuführsteuerungseinrichtung zum Steuern der Zuführmenge der Ammoniak erzeugenden Verbindung,
wobei der Katalysator (27) eine Funktion zum Speichern von zumindest einem Teil der Ammoniak erzeugenden Verbindung, die dem Katalysator (27) zugeführt wird, in dem Katalysator und zum Erzeugen von Ammoniak aus der Ammoniak erzeugenden Verbindung, die in dem Katalysator (27) gespeichert ist, und zum Verwenden des erzeugten Ammoniaks zum Reduzieren des NOx in dem Abgas aufweist, wobei die Speicherkapazität (SC) des Katalysators (27) zunimmt, wenn die Temperatur des Katalysators (27) niedrig ist, im Vergleich dazu, wenn die Temperatur des Katalysators (27) hoch ist,
wobei das System ferner eine Beurteilungseinrichtung zum Beurteilen aufweist, ob eine Speicherkapazität (SC) des Katalysators (27) größer ist als eine voreingestellte zulässige Kapazitätsobergrenze (SCU), wobei die Beurteilungseinrichtung beurteilt, dass die Speicherkapazität (SC) des Katalysators (27) größer als die zulässige Kapazitätsobergrenze (SCU) ist, wenn die Temperatur des Katalysators niedriger ist als eine voreingestellte Temperatur, die auf eine Temperatur eingestellt ist, wo die Speicherkapazität (SC) des Katalysators der zulässigen Obergrenze-Kapazität (SCU) entspricht, und
wobei die Zuführsteuerungseinrichtung die Zuführung der Ammoniak erzeugenden Verbindung verhindert, wenn die Speicherkapazität (SC) des Katalysators (27) größer als die zulässige Kapazitätsobergrenze (SCU) ist.

2. Abgasreinigungssystem für einen Verbrennungsmotor (1) nach Anspruch 1, wobei die zulässige Kapazitätsobergrenze (SCU) so eingestellt ist, dass die Menge einer Substanz, die aus der aus dem Katalysator (27) abgeführten Ammoniak erzeugenden Verbindung gewonnen wird, später den zulässigen Obergrenzebetrag nicht überschreitet.

3. Abgasreinigungssystem für einen Verbrennungsmotor (1) nach Anspruch 2, wobei die Substanz, die aus der Ammoniak erzeugenden Verbindung gewonnen wird, zumindest eine Substanz ist, die aus Ammoniak, Cyanwasserstoff und Isocyansäure ausgewählt wird.

4. Abgasreinigungssystem für einen Verbrennungsmotor (1) nach Anspruch 2, wobei die zulässige Kapazitätsobergrenze (SCU) so eingestellt ist, dass der Ammoniak, der Cyanwasserstoff und die Isocyansäure, die später aus dem Katalysator (27) abgeführt werden, allesamt die jeweiligen zulässigen Obergrenzebeträge (QAU, QCU, QIU) nicht überschreiten.

5. Abgasreinigungssystem für einen Verbrennungsmotor (1) nach Anspruch 1, wobei eine NOx-Reduktionsrate des Katalysators (27) ansteigt, wenn die Temperatur des Katalysators (27) hoch ist, im Vergleich dazu, wenn die Temperatur des Katalysators (27) niedrig ist, und wobei die voreingestellte Temperatur höher eingestellt wird als die Temperatur, wenn die NOx-Reinigungsrate des Katalysators (27) einer voreingestellten zulässigen Untergrenzerate entspricht.

6. Abgasreinigungssystem für einen Verbrennungsmotor (1) nach Anspruch 1, wobei die Zuführsteuerungseinrichtung die Zuführung der Ammoniak erzeugenden Verbindung erlaubt, wenn die Speicherkapazität (SC) des Katalysators (27) geringer als die zulässige Kapazitätsobergrenze (SCU) ist.

## Revendications

1. Système de purification d'échappement d'un moteur à combustion interne (1) prévoyant un catalyseur (27) approprié pour la réduction de NOx dans le gaz d'échappement grâce à de l'ammoniaque sous un excès de l'oxygène dans un passage d'échappement de moteur, le système comportant :
des moyens d'alimentation (32) destinés à délivrer un composé de génération d'ammoniaque au catalyseur (27) ; et
des moyens de commande d'alimentation destinés à commander la quantité d'alimentation du composé de génération d'ammoniaque,
le catalyseur (27) ayant une fonction de stockage d'au moins une partie du composé de génération d'ammoniaque délivré au catalyseur (27) dans le catalyseur (27) et de génération de l'ammoniaque à partir du composé de génération d'ammoniaque stocké dans le catalyseur (27) et d'utilisation de l'ammoniaque généré pour réduire le NOx dans le gaz d'échappement, la capacité de stockage du catalyseur (27) devenant plus grande quand la température du catalyseur (27) est faible comparée à quand la température du catalyseur (27) est élevée,
le système comportant en outre des moyens d'estimation destinés à estimer si une capacité de stockage (SC) du catalyseur (27) est plus grande qu'une capacité de limite supérieure possible prédéterminée (SCU), les moyens d'estimation estimant que la capacité de stockage (SC) du catalyseur (27) est plus grande que la capacité de limite supérieure possible (SCU) quand la température du catalyseur (27) est inférieure à une température prédéterminée établie à une température où la capacité de stockage (SC) du catalyseur (27) devient la capacité de limite supérieure possible (SCU), et
dans lequel les moyens de commande d'alimentation empêchent l'alimentation en composé de génération d'ammoniaque quand la capacité de stockage (SC) du catalyseur (27) est plus grande que la capacité de limite supérieure possible (SCU).

2. Système de purification d'échappement d'un moteur à combustion interne (1) selon revendication 1, dans lequel la capacité de limite supérieure possible (SCU) est établie de telle sorte que la quantité d'une substance obtenue à partir du composé de génération d'ammoniaque libéré par le catalyseur (27) ultérieurement ne dépasse pas la quantité de limite supérieure possible.

3. Système de purification d'échappement d'un moteur à combustion interne (1) selon revendication 2, dans lequel la substance obtenue à partir du composé de génération d'ammoniaque est au moins une substance choisie parmi l'ammoniaque, le cyanure d'hydrogène, et l'acide isocyanique.

4. Système de purification d'échappement d'un moteur à combustion interne (1) selon revendication 2, dans lequel la capacité de limite supérieure possible (SCU) est établie de telle sorte que l'ammoniaque, le cyanure d'hydrogène, et l'acide isocyanique libérés ultérieurement par le catalyseur (27) dans leur ensemble ne dépassent pas les quantités de limite supérieure possibles exigées (QAU, QCU, QIU).

5. Système de purification d'échappement d'un moteur à combustion interne (1) selon revendication 1, dans lequel un taux de réduction de NOx du catalyseur (27) devient plus élevé quand la température du catalyseur (27) est élevée comparée à quand la température du catalyseur (27) est basse, et dans lequel la température prédéterminée est établie plus élevée que la température où le taux de purification de NOx du catalyseur (27) devient un taux de limite inférieure possible prédéterminé.

6. Système de purification d'échappement d'un moteur à combustion interne (1) selon revendication 1, dans lequel les moyens de commande d'alimentation permettent l'alimentation du composé de génération d'ammoniaque quand la capacité de stockage (SC) du catalyseur (27) est plus faible que la capacité de limite supérieure possible (SCU).
